# EUROPÄISCHE PATENTSCHRIFT

(11) **EP 2 976 213 B1**
(45) Veröffentlichungstag und Bekanntmachung des Hinweises auf die Patenterteilung: **31.01.2018**
(21) Anmeldenummer: 14711974.7
(22) Anmeldetag: 21.03.2014
(51) Int. Cl.: B29C 70/44, B29C 70/54, B29C 70/74, B29C 70/88, B29D 23/00, B29C 35/02, B29C 70/08

(54) **VERFAHREN UND HERSTELLUNGSSYSTEM ZUR HERSTELLUNG EINES FASERVERSTÄRKTEN STRUKTURBAUTEILS**
METHOD AND MANUFACTURING SYSTEM FOR MANUFACTURING A FIBRE-REINFORCED STRUCTURAL MEMBER
PROCÉDÉ ET SYSTÈME DE FABRICATION POUR LA FABRICATION D'UNE PIÈCE STRUCTURALE RENFORCÉE PAR DES FIBRES

(30) Priorität: 22.03.2013 DE 102013205089
(43) Veröffentlichungstag der Anmeldung: 27.01.2016
(73) Patentinhaber: SuperTEX composites GmbH, 6410 Telfs (AT)
(72) Erfinder: TROI, Valentine, A-6020 Innsbruck (AT)
(74) Vertreter: Dilg, Haeusler, Schindelmann Patentanwaltsgesellschaft mbH
(86) Internationale Anmeldenummer: PCT/EP2014/055723
(87) Internationale Veröffentlichungsnummer: WO 2014/147230

(56) Entgegenhaltungen:
- EP-A2- 2 324 891
- WO-A2-01/78957
- WO-A2-2010/129975
- CH-A- 459 549
- DE-A1-102007 060 029
- DE-A1-102010 056 293
- DE-A1-102011 009 506
- GB-A- 727 657
- US-A- 4 009 067
- US-A- 5 960 834
- US-A1- 2007 175 577

## Beschreibung

Die Erfindung betrifft ein Verfahren zur Herstellung eines faserverstärkten Strukturbauteils.
Aus der WO 2010/129 975 A2 ist ein Verfahren zur Herstellung eines faserverstärkten Strukturbauteils bekannt. Ein Schlauchgewebe aus Verstärkungsfasern wird auf eine Einführhilfe aufgeschoben, die in einen flexiblen Schlauch eingeführt und in Position gebracht wird. Das derart hergestellte Halbzeug wird anschließend in eine gewünschte Form gebracht. Zur Herstellung eines faserverstärkten Strukturbauteils müssen die Verstärkungsfasern mit einem Matrixmaterial getränkt werden. Hierzu wird das Matrixmaterial durch Druck in das Innere des Schlauches eingebracht, wobei der Druck lediglich in den Raum zwischen dem Schlauch und der Einführhilfe eingebracht wird. Durch anschließendes Aushärten des Matrixmaterials wird das faserverstärkte Strukturbauteil ausgebildet. Nachteilig ist, dass das Matrixmaterial bei Erzielung einer gewünschten Qualität des faserverstärkten Strukturbauteils nur mit wenig Druck und dementsprechend langsam eingebracht werden kann.
Die US 2007/0175577 offenbart ein Verfahren zum Bilden eines hohlen Verbundkonstruktionselementes, welches ein Bereitstellen einer länglichen aufblasbaren Formbaugruppe aufweist.
Der Erfindung liegt die Aufgabe zugrunde, ein Verfahren zu schaffen, das eine einfache und schnelle Herstellung von faserverstärkten Strukturbauteilen mit hoher Qualität ermöglicht.

Diese Aufgabe wird durch ein Verfahren mit den Merkmalen des Anspruchs 1 gelöst. Erfindungsgemäß wurde erkannt, dass das Matrixmaterial am schnellsten unter einem hohen Druck bzw. Überdruck in den Aufnahmeraum einbringbar ist, es jedoch durch den hohen Druck zu einer unerwünschten Verformung des ersten inneren Wandelements und ggf. auch des zweiten äußeren Wandelements kommt, die wiederum zu Verschiebungen der Verstärkungsfasern und/oder zu einer ungleichmäßigen Wanddicke des späteren Strukturbauteils führen. Dadurch, dass durch die erste Zuführöffnung ein Druckmedium, wie beispielsweise Luft, in den Innenraum zugeführt und dadurch ein gewünschter Innendruck pᵢ erzeugt wird, wird eine unerwünschte Verformung des inneren Wandelements aufgrund des unter dem Druck pₘ stehenden bzw. zugeführten Matrixmaterials vermieden, wodurch keine Verschiebungen der Verstärkungsfasern auftreten und auch der Aufnahmeraum in radialer Richtung nicht aufgeweitet wird, so dass eine gleichmäßige Verteilung der Verstärkungsfasern in Verbindung mit einer gleichmäßigen Wanddicke des Strukturbauteils erzielbar ist. Dadurch, dass der Innendruck pᵢ an den gewünschten Druck pₘ zum Einbringen des Matrixmaterials anpassbar ist, kann ein hoher Druck pₘ bzw. Überdruck eingestellt werden, wodurch das Matrixmaterial schnell in den Aufnahmeraum einbringbar ist, ohne dass es zu einer Beeinträchtigung der Qualität des späteren Strukturbauteils kommt. Durch den Innendruck pᵢ wird somit ein Gegendruck zu dem Druck pₘ des Matrixmaterials gebildet. Weiterhin wird ein schnelles Einbringen des Matrixmaterials in den Aufnahmeraum gewährleistet. Dadurch, dass der Innendruck pᵢ höchstens gleich dem Druck pₘ bzw. geringfügig niedriger als der Druck pₘ ist, wird der Aufnahmeraum beim Einbringen des Matrixmaterials in radialer Richtung nicht verengt bzw. geringfügig vergrößert, so dass das Matrixmaterial ungehindert in den Aufnahmeraum einströmen und diesen in Längsrichtung durchströmen kann. Eine Volumenverkleinerung des Innenraums beträgt vorzugsweise höchstens 10 % des Volumens des Innenraums bei Umgebungsdruck p₀, insbesondere höchstens 5 % und insbesondere höchstens 1 %. Hierdurch wird die Qualität des Strukturbauteils gewährleistet. Die Wandelemente sind als Hohlprofil ausgebildet und begrenzen einen umlaufenden Aufnahmeraum. Vorzugsweise weisen die Wandelemente einen runden oder ovalen Querschnitt auf. Mit dem erfindungsgemäßen Verfahren können somit faserverstärkte rohrförmige Strukturbauteile hergestellt werden.

Das erste innere Wandelement und/oder das zweite äußere Wandelement sind vorzugsweise einteilig ausgebildet. Zum einfachen Formen sind das innere Wandelement und/oder das äußere Wandelement aus einem biegbaren Material, insbesondere einem Kunststoffmaterial, wie beispielsweise einem thermoplastischen Kunststoffmaterial hergestellt. Vorzugsweise sind das innere Wandelement und/oder das äußere Wandelement aus einem elastisch verformbaren bzw. biegbaren Material hergestellt. Hierdurch ist das Strukturbauteil-Halbzeug in einfacher Weise manuell und/oder maschinell verformbar.

Das Formen des Strukturbauteil-Halbzeugs kann vor und/oder nach dem Einbringen des Matrixmaterials erfolgen.

Durch das Aushärten des eingebrachten Matrixmaterials wird das faserverstärkte Strukturbauteil ausgebildet. Nach dem Aushärten kann je nach Bedarf das erste Wandelement und/oder das zweite Wandelement entfernt werden. Dadurch, dass das erste Wandelement und/oder das zweite Wandelement aus einem elastisch verformbaren Material, insbesondere einem Kunststoffmaterial, ausgebildet sind, ist eine Entfernung in einfacher Weise möglich. Aufgrund der vorzugsweise einteiligen Ausbildung des ersten Wandelements und/oder des zweiten Wandelements weist das faserverstärkte Strukturbauteil nach dem Entfernen eine glatte und gratfreie Oberfläche auf. Aufgrund dieser hohen Oberflächenqualität muss die Oberfläche des Strukturbauteils nicht nachbearbeitet werden.

Strukturbauteil-Halbzeuge mit einer Länge L_{A} in der Längsrichtung von höchstens 10,0 m, insbesondere von höchstens 6,0 m, insbesondere von höchstens 4,0 m, insbesondere von höchstens 3,5 m und insbesondere von höchstens 3,0 m ermöglichen kurze Taktzeiten bei der Herstellung von faserverstärkten Strukturbauteilen. Hierdurch wird eine einfache und schnelle Herstellung von faserverstärkten Strukturbauteilen gewährleistet. Eine bevorzugte Ausführungsform des Verfahrens gewährleistet ein schnelles Einbringen des Matrixmaterials. Je höher der Druck pₘ ist, desto schneller dringt das Matrixmaterial in den Aufnahmeraum ein und durchströmt diesen in Längsrichtung. Die Druckdifferenz bzw. der Überdruck im Vergleich zu dem Umgebungsdruck pₒ gewährleistet somit eine geringe Taktzeit bei der Herstellung von faserverstärkten Strukturbauteilen. Eine weitere bevorzugte Ausführungsform des Verfahrens gewährleistet eine hohe Qualität des Strukturbauteils. Dadurch, dass der Innendruck pᵢ mindestens gleich dem Druck pₘ bzw. größer als der Druck pₘ ist, wird eine unerwünschte radiale Aufweitung des Aufnahmeraums aufgrund einer Verformung des inneren Wandelements vermieden. Verschiebungen bzw. Verzerrungen der Verstärkungsfasern werden somit ebenfalls vermieden. Der im Vergleich zu dem Druck pₘ größere Innendruck pᵢ bewirkt vorzugsweise keine Vergrößerung des inneren Wandelements bzw. keine Volumenvergrößerung des Innenraums. Falls bei hohen Druckdifferenzen zwischen dem Druck pₘ und dem Innendruck pᵢ eine Volumenvergrößerung des Innenraums auftritt, beträgt diese vorzugsweise höchstens 10 % des Volumens des Innenraums bei Umgebungsdruck, insbesondere höchstens 5 % und insbesondere höchstens 1 %. Eine weitere bevorzugte Ausführungsform des Verfahrens ermöglicht je nach Bedarf ein flexibles Einstellen des Innendrucks pᵢ im Verhältnis zu dem Druck pₘ, um das Matrixmaterial möglichst schnell in den Aufnahmeraum einzubringen, ohne dass die Qualität des Strukturbauteils beeinträchtigt wird. Eine weitere bevorzugte Ausführungsform des Verfahrens gewährleistet eine hohe Qualität des Strukturbauteils. Wird das Strukturbauteil-Halbzeug vor dem Einbringen des Matrixmaterials in der Bauteilform angeordnet, wird einerseits gewährleistet, dass das Strukturbauteil-Halbzeug beim Einbringen des Matrixmaterials und beim anschließenden Aushärten in der gewünschten Sollform verbleibt. Andererseits wird bei einer umfänglich geschlossenen Bauteilform gewährleistet, dass eine unerwünschte Volumenvergrößerung des zweiten äußeren Wandelements beim Einbringen des Matrixmaterials unter dem Druck pₘ vermieden wird. Durch das Vermeiden einer unerwünschten Verformung des äußeren Wandelements kommt es insbesondere nicht zu unerwünschten Verschiebungen bzw. Verzerrungen der Verstärkungsfasern und/oder zu einer ungleichmäßigen Wanddicke des Strukturbauteils. Wird das Strukturbauteil-Halbzeug nach dem Zuführen des Matrixmaterials in die Bauteilform eingelegt, so ist dieses zum Aushärten in der gewünschten Sollform festgelegt.

Die Bauteilform ist einteilig oder mehrteilig ausgebildet. Die Bauteilform kann das Strukturbauteil-Halbzeug umfänglich nur teilweise oder vollständig umgeben. Insbesondere ist die Bauteilform mehrteilig ausgebildet, da hierdurch das Strukturbauteil-Halbzeug einfach in der Bauteilform angeordnet werden kann, jedoch die Bauteilform aufgrund des äußeren Wandelements die Oberfläche des Strukturbauteils nicht beeinträchtigt. Insbesondere bei einem nachträglichen Entfernen des äußeren Wandelements ist die Oberfläche des Strukturbauteils gratfrei und glatt, auch wenn die Bauteilform mehrteilig ausgebildet ist. Eine weitere bevorzugte Ausführungsform des Verfahrens gewährleistet auf flexible Weise eine hohe Qualität des Strukturbauteils. Dadurch, dass die Querschnittsform Q_{B} der Bauteilform von der Querschnittsform Q_{S} des Strukturbauteil-Halbzeugs abweicht, können in flexibler Weise Strukturbauteile mit unterschiedlichsten Querschnittsformen hergestellt werden. Weist die Bauteilform beispielsweise eine rechteckige Querschnittsform Q_{B} und das Strukturbauteil-Halbzeug eines kreisförmige Querschnittsform Q_{S} auf, so passt sich das Strukturbauteil-Halbzeug beim Einbringen des Matrixmaterials aufgrund eines hohen Innendrucks pᵢ zumindest teilweise an die Querschnittsform Q_{B} der Bauteilform an, so dass ein Strukturbauteil mit einer im Wesentlichen rechteckigen Querschnittsform bzw. ovalen Querschnittsform erzeugbar ist. Eine weitere bevorzugte Ausführungsform des Verfahrens gewährleistet auf einfache Weise die Herstellung von Strukturbauteilen mit hoher Qualität. Dadurch, dass eine Bauteilform aus einem nicht-metallischen Material hinsichtlich der Stabilität ausreichend ist, können auf einfache, kostengünstige und flexible Weise Bauteilformen und entsprechende Strukturbauteile hergestellt werden. Eine weitere bevorzugte Ausführungsform des Verfahrens gewährleistet eine einfache und schnelle Herstellung von gekrümmten Strukturbauteilen. Dadurch, dass das zweite Wandelement druckstabil ist, muss die Bauteilform das Strukturbauteil-Halbzeug beim Einbringen des Matrixmaterials nicht vollständig umgeben. Es ist ausreichend, wenn das Strukturbauteil-Halbzeug vor oder nach dem Einbringen des Matrixmaterials in der umfänglich teilweise offenen bzw. nicht geschlossenen Bauteilform angeordnet wird. Eine weitere bevorzugte Ausführungsform des Verfahrens gewährleistet ein einfaches und schnelles Einbringen des Matrixmaterials. Durch das Verhältnis der Länge L_{A} zu der radialen Breite B_{A} wird gewährleistet, dass der Widerstand zum Einbringen des Matrixmaterials aufgrund der begrenzten Breite B_{A} im Verhältnis zu der zu durchströmenden Länge L_{A} ausreichend klein ist, um die gewünschten Taktzeiten zu erreichen. Eine weitere bevorzugte Ausführungsform des Verfahrens gewährleistet eine einfache Herstellung von Strukturbauteilen mit einer gewünschten Sollform. Vorzugsweise sind das erste Wandelement und/oder das zweite Wandelement einteilig ausgebildet. Das biegbare Material ist vorzugsweise ein Kunststoffmaterial. Vorzugsweise ist das erste Wandelement und/oder das zweite Wandelement aus einem thermoplastischen und/oder elastomeren Kunststoffmaterial ausgebildet. Vorzugsweise ist das Material elastisch verformbar. Das zweite Wandelement ist beispielsweise aus einem biegbaren Hart-Kunststoffmaterial ausgebildet, das zur Biegung an einer Außenseite Rillen bzw. Querrillen aufweist. Eine weitere bevorzugte Ausführungsform des Verfahrens gewährleistet auf einfache und flexible Weise die Herstellung von Strukturbauteilen mit hoher Qualität. Dadurch, dass das erste Wandelement und/oder das zweite Wandelement nach dem Aushärten des Matrixmaterials entfernt werden, verbleibt eine gratfreie und glatte Oberfläche. Die glatte Oberfläche ist zudem hart und optisch ansprechend, so dass keine weitere Nachbearbeitung erforderlich ist. Bei Bedarf kann die Oberfläche unmittelbar beschichtet und/oder lackiert werden. Hierdurch entstehen optisch ansprechende Strukturbauteile mit einer hohen Stabilität und Qualität. Zudem weist das Strukturbauteil ein geringes Gewicht auf. Eine weitere bevorzugte Ausführungsform des Verfahrens gewährleistet eine hohe Qualität des Strukturbauteils. Dadurch, dass das Druckmedium vor dem Matrixmaterial oder gleichzeitig mit dem Matrixmaterial zugeführt wird, weist das innere Wandelement bereits vor dem Einbringen bzw. mit dem Einbringen des Matrixmaterials eine hohe Stabilität auf, so dass dieses durch das Einbringen des Matrixmaterials im Wesentlichen nicht verformt wird. Eine weitere bevorzugte Ausführungsform des Verfahrens ermöglicht in einfacher Weise das Einbringen des Matrixmaterials bzw. das Zuführen des Druckmediums. Vorzugsweise sind die Zuführöffnungen an derselben Stirnseite des Strukturbauteil-Halbzeugs ausgebildet. Eine weitere bevorzugte Ausführungsform des Verfahrens gewährleistet eine schnelle Herstellung des Strukturbauteils. Dadurch, dass der Aufnahmeraum eine Abführöffnung aufweist, kann in dem Aufnahmeraum enthaltene Luft beim Einbringen des Matrixmaterials entweichen, wodurch das Einbringen des Matrixmaterials erleichtert und beschleunigt wird. Demgegenüber muss der Innenraum zum Erzeugen des Innendrucks pᵢ endseitig verschlossen sein. Hierzu kann das innere Wandelement selbst den Verschluss ausbilden oder eine Verschlussvorrichtung vorgesehen sein, die den Innenraum endseitig verschließt. Eine weitere bevorzugte Ausführungsform des Verfahrens gewährleistet eine schnelle Herstellung des Strukturbauteils. Dadurch, dass an die Verstärkungsfasern eine elektrische Spannung angelegt wird, wird aufgrund des Stromflusses Wärme erzeugt, die die Viskosität des Matrixmaterials beim Einbringen erniedrigt und so das Einbringen des Matrixmaterials in den Aufnahmeraum beschleunigt. Durch die Wärme wird zudem das Aushärten des Matrixmaterials beschleunigt. Die Verstärkungsfasern sind vorzugsweise als Kohlefasern ausgebildet, da diese eine hohe Leitfähigkeit aufweisen. Eine weitere bevorzugte Ausführungsform des Verfahrens gewährleistet eine schnelle Herstellung des Strukturbauteils. Dadurch, dass das zweite Wandelement in radialer Richtung druckstabil ist, kann das Matrixmaterial mit einem hohen Druck pₘ zugeführt werden, ohne dass sich das zweite Wandelement in radialer Richtung verformt. Eine Bauteilform bzw. Negativform ist nicht erforderlich. Vorzugsweise ist das zweite Wandelement aus PVC ausgebildet. Das zweite Wandelement ist vorzugsweise ein faserverstärkter Kunststoffschlauch bzw. PVC-Schlauch. Zum Verbleib des Strukturbauteil-Halbzeugs in der gewünschten Sollform können einfache Hilfsmittel bzw. Fixiermittel eingesetzt werden, die das Strukturbauteil-Halbzeug punktweise und/oder bereichsweise fixieren. Eine weitere bevorzugte Ausführungsform des Verfahrens gewährleistet auf einfache Weise eine Druckstabilität des zweiten Wandelements in radialer Richtung. Hierdurch kann das Matrixmaterial mit einem hohen Druck pₘ zugeführt werden. Eine Bauteilform bzw. Negativform ist nicht erforderlich. Das zweite Wandelement ist vorzugsweise gewebeverstärkt. Eine weitere bevorzugte Ausführungsform des Verfahrens gewährleistet eine ausreichende Stabilität des zweiten Wandelements sowie eine ausreichende Verformbarkeit bzw. Biegbarkeit. Eine weitere bevorzugte Ausführungsform des Verfahrens ermöglicht aufgrund des niedrigen Innendrucks pᵢ zunächst eine hohe Zuführgeschwindigkeit und aufgrund der anschließenden Erhöhung des Innendrucks pᵢ eine Verengung des Aufnahmeraums in radialer Richtung zur Erhöhung des Faservolumenverhältnisses. Zur Durchführung des Verfahrens wird ein Herstellungssystem verwendet. Dessen erste Pumpe ist an den ersten Kanal der Anschlussvorrichtung angeschlossen, wohingegen die zweite Pumpe an den zweiten Kanal der Anschlussvorrichtung angeschlossen ist. Durch die Verschlussvorrichtung kann in einfacher Weise der Innenraum an einem zu der Anschlussvorrichtung gegenüberliegenden Ende verschlossen werden, sodass in einfacher Weise das Einstellen des Innendrucks möglich ist. Aufgrund der Verschlussvorrichtung muss das innere Wandelement nicht selbst den Innenraum verschließen. Hierdurch wird eine einfache Herstellung von faserverstärkten Strukturbauteilen aus einem Strukturbauteil-Halbzeug ermöglicht Das Strukturbauteil-Halbzeug kann eine große Länge aufweisen und zur Herstellung von faserverstärkten Strukturbauteilen in einfacher Weise auf die gewünschte Länge abgeschnitten werden. Das hierdurch entstehende offene Ende wird durch die Verschlussvorrichtung verschlossen. Die Verschlussvorrichtung kann beispielsweise eine Dichteinheit entsprechend der ersten Dichteinheit aufweisen.

Weitere Merkmale, Vorteile und Einzelheiten ergeben sich aus der nachfolgenden Beschreibung mehrerer Ausführungsbeispiele. Es zeigen:
- Fig. 1: ein Herstellungssystem gemäß einem ersten Ausführungsbeispiel zur Herstellung eines faserverstärkten Strukturbauteils,
- Fig. 2: einen Querschnitt durch das Herstellungssystem im Bereich einer Bauteilform,
- Fig. 3: einen Längsschnitt durch das Herstellungssystem im Bereich der Bauteilform,
- Fig. 4: einen zeitlichen Verlauf eines Innendrucks pᵢ und eines Drucks pₘ zum Einbringen von Matrixmaterial,
- Fig. 5: einen Querschnitt durch ein Herstellungssystem gemäß einem zweiten Ausführungsbeispiel im Bereich einer Bauteilform, und
- Fig. 6: einen zeitlichen Verlauf eines Innendrucks pᵢ und eines Drucks pₘ zum Einbringen von Matrixmaterial.

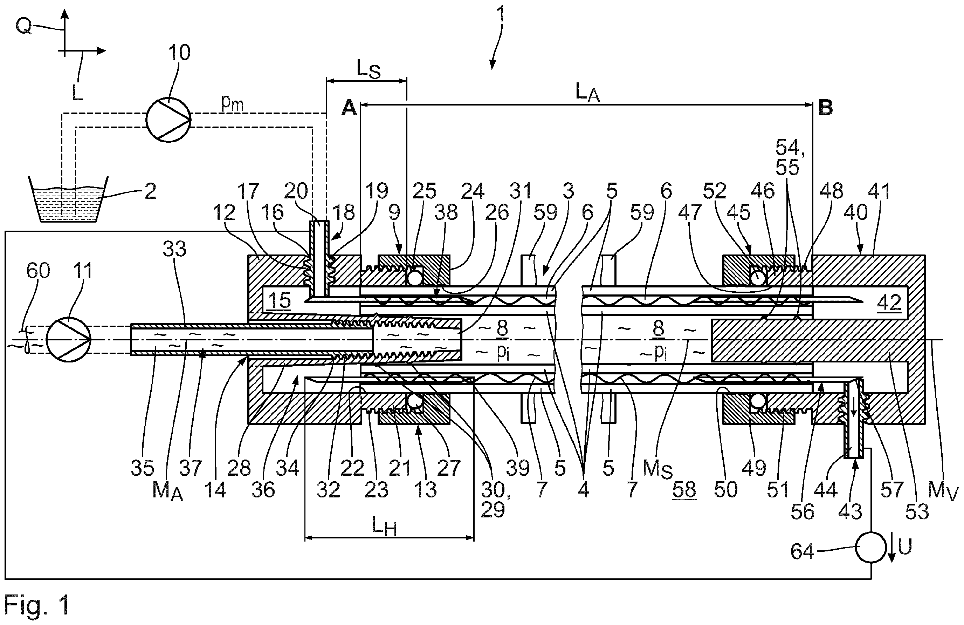

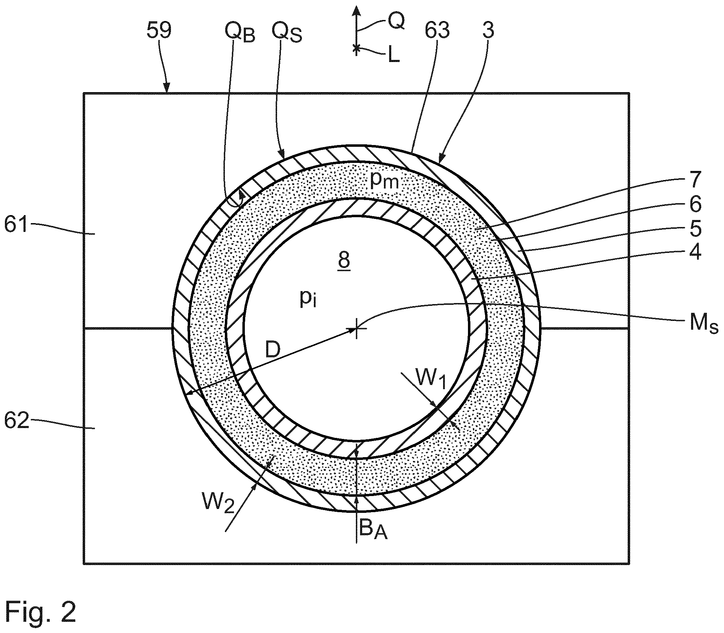

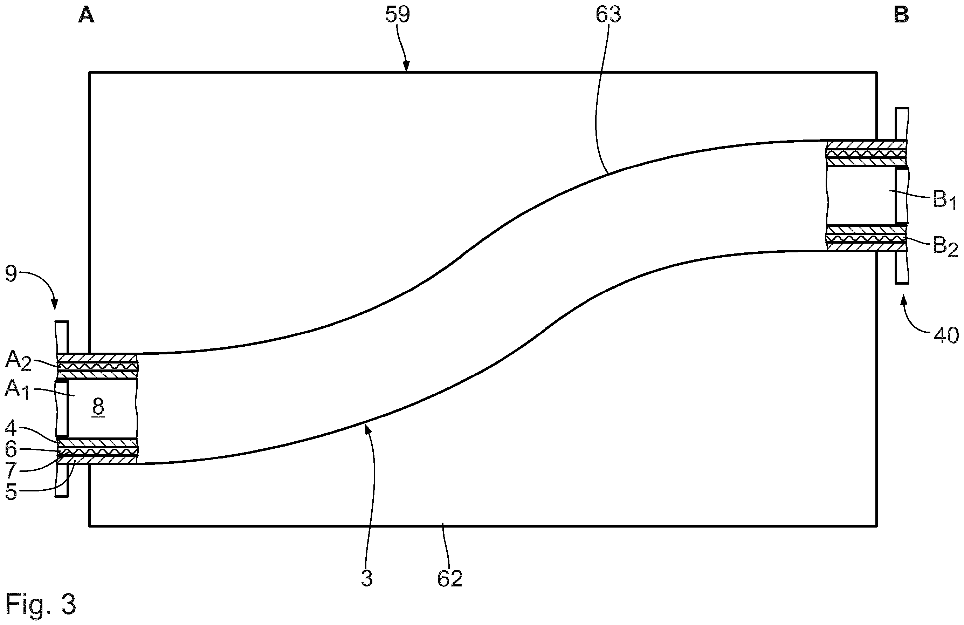

Nachfolgend ist anhand der Figuren 1 bis 4 ein erstes Ausführungsbeispiel beschrieben. Ein Herstellungssystem 1 dient zum Zuführen eines Matrixmaterials 2 in ein Strukturbauteil-Halbzeug 3 und zum anschließenden Aushärten des Matrixmaterials 2. Das Strukturbauteil-Halbzeug 3 weist ein erstes inneres Wandelement 4 auf, das von einem zweiten äußeren Wandelement 5 umgeben ist. Die Wandelemente 4, 5 sind hohlzylinderförmig ausgebildet und vorzugsweise konzentrisch zu einer Mittellängsachse M_{S} angeordnet. Die Wandelemente 4, 5 sind aus einem manuell biegbaren Material, insbesondere aus einem elastisch verformbaren Kunststoffmaterial ausgebildet. Beispielsweise sind die Wandelemente 4, 5 aus einem der Materialien Gummi, PCV, PE, PA, PU, PTFE und/oder Silikon. Die Wandelemente 4, 5 begrenzen in einer radialen Richtung bzw. Querrichtung Q einen Aufnahmeraum 6, der sich in einer Längsrichtung L erstreckt. In dem Aufnahmeraum 6 sind Verstärkungsfasern 7 angeordnet, die zur Ausbildung eines faserverstärkten Strukturbauteils mit dem Matrixmaterial 2 getränkt werden müssen. Bei den Verstärkungsfasern 7 handelt es sich beispielsweise um Glasfasern, Kohlenstofffasern, Aramidfasern, Basaltfasern, Hanf, Flachs, Baumwolle oder Mischungen daraus. Das innere Wandelement 4 begrenzt in der Querrichtung Q einen Innenraum 8. Da das Strukturbauteil-Halbzeug 3 rohrförmig bzw. hohlzylinderförmig ausgebildet ist, ist der im Querschnitt ringförmige Aufnahmeraum 6 und der Innenraum 8 an beiden Enden des Strukturbauteil-Halbzeugs 3 offen. Dementsprechend weist der Innenraum 8 an einer Stirnseite A eine erste Öffnung A₁ und an einer gegenüberliegenden Stirnseite B eine zweite Öffnung B₁ auf. Entsprechend weist der Aufnahmeraum 6 an der Stirnseite A eine ringförmige erste Öffnung A₂ und an der Stirnseite B eine ringförmige zweite Öffnung B₂ auf. Die Öffnung A₁ des Innenraums 8 wird nachfolgend als erste Zuführöffnung und die Öffnung A₂ des Aufnahmeraums 6 als zweite Zuführöffnung bezeichnet.

Der Aufnahmeraum 6 weist in der Längsrichtung L eine Länge L_{A} und in der Querrichtung Q eine radiale Breite B_{A} auf, wobei für das Verhältnis der Länge L_{A} zu der Breite B_{A} gilt: 50 ≤ L_{A} / B_{A} ≤ 2000, insbesondere 100 ≤ L_{A} / B_{A} ≤ 1500 und insbesondere 250 ≤ L_{A} / B_{A} ≤ 1000. Für die Länge L_{A} gilt weiterhin: L_{A} ≤ 4,0 m, insbesondere L_{A} ≤ 3,5 m und insbesondere L_{A} ≤ 3,0 m.

Das innere Wandelement 4 weist eine radiale Wandstärke W₁ und das äußere Wandelement 5 eine radiale Wandstärke W₂ auf. Die radiale Wandstärke W₁ und/oder die radiale Wandstärke W₂ liegt vorzugsweise zwischen 1 mm und 6 mm, insbesondere 1,5 mm und 5 mm, und insbesondere zwischen 2 mm und 4 mm. Die Wandstärke W₁ und W₂ können gleich oder unterschiedlich ausgebildet sein. Für das Verhältnis eines äußeren Durchmessers D des äußeren Wandelements 5 zu der Wandstärke W₂ bzw. W des äußeren Wandelements 5 gilt vorzugsweise: 5 ≤ D/W ≤ 30, insbesondere 10 ≤ D/W ≤ 20.

Das Herstellungssystem 1 weist eine Anschlussvorrichtung 9 und zwei Pumpen 10, 11 auf. Eine erste Pumpe dient zum Einbringen des Matrixmaterials 2 in den Aufnahmeraum 6 unter einem Druck pₘ, wohingegen eine zweite Pumpe 11 zum Einstellen eines Innendrucks pᵢ im Innenraum 8 dient. Die Pumpen 10, 11 sind in Figur 1 lediglich schematisch dargestellt. Der Innendruck pᵢ wird mittels der zweiten Pumpe 11 durch Zuführen eines Druckmediums 60 in den Innenraum 8 eingestellt. Das Druckmedium 60 ist beispielsweise Luft.

Die Anschlussvorrichtung 9 weist einen ersten Grundkörper 12 auf, an dem eine erste Dichteinheit 13 und eine zweite Dichteinheit 14 angeordnet sind. Der erste Grundkörper 11 ist in Fig. 1 durch gestrichelte Linien veranschaulicht. Der erste Grundkörper 12 ist hohlzylinderförmig ausgebildet und begrenzt einen ersten Grundkörper-Innenraum 15. In dem Grundkörper 12 ist eine Bohrung 16 mit einem Innengewinde 17 ausgebildet, in das ein erstes Anschlusselement 18 mit einem zugehörigen Außengewinde 19 eingeschraubt ist. Das Anschlusselement 18 weist eine erste Durchgangsöffnung 20 auf, die in den Grundkörper-Innenraum 15 mündet.

Die erste Dichteinheit 13 weist ein erstes ringförmiges Aufnahmeelement 21 mit einer ersten Aufnahmeöffnung 22 auf, in die das Strukturbauteil-Halbzeug 3 einführbar ist. Das Aufnahmeelement 21 ist einteilig mit dem Grundkörper 12 ausgebildet. Die Innenseiten des Aufnahmeelements 21 und des Grundkörpers 12 verlaufen bündig zueinander. An dem Aufnahmeelement 21 ist ein Außengewinde 23 ausgebildet, auf das ein erstes Anpresselement 24 mit einem zugehörigen Innengewinde 25 aufschraubbar ist. Das Anpresselement 24 weist eine zweite Aufnahmeöffnung 26 auf, durch die das Strukturbauteil-Halbzeug 3 einführbar ist. In einem von dem Aufnahmeelement 21 und dem Anpresselement 24 begrenzten Spalt ist ein elastisches Dichtelement 27 angeordnet. Das Dichtelement 27 ist ringförmig ausgebildet und zum Abdichten deformierbar. Im Bereich des Innengewindes 25 ist der Innendurchmesser des Anpresselements 24 konisch ausgebildet, so dass mit zunehmendem Aufschrauben des Anpresselements 24 auf das Aufnahmeelement 21 eine Anpresskraft in radialer Richtung erhöht wird. Die erste Dichteinheit 13 dient zum Abdichten des Aufnahmeraums 6 gegenüber einer Umgebung 58.

Die zweite Dichteinheit 14 weist ein Anlageelement 28 auf, das zum Anliegen gegen eine Innenseite des inneren Wandelements 4 dient und in den Innenraum 8 einführbar ist. Das Anlageelement 28 ist einteilig mit dem Grundkörper 12 ausgebildet. Durch die einteilige Ausbildung ist der Grundkörper-Innenraum 15 an einer der Aufnahmeöffnung 22 gegenüberliegenden Seite abgeschlossen. Das Anlageelement 28 erstreckt sich durch den Grundkörper-Innenraum 15 und durch die Aufnahmeöffnungen 22 und 26, so dass der von dem Anlageelement 28 und von dem Grundkörper 12 bzw. dem Aufnahmeelement 21 und dem Anpresselement 24 begrenzte Raum einen Ringraum ausbildet.

Das Anlageelement 28 ist an einer Außenseite konisch ausgebildet, so dass der Außendurchmesser in Richtung des mit dem Grundkörper 12 verbundenen Endes zunimmt. An der Außenseite sind zwei in Richtung einer Mittellängsachse M_{A} beabstandete Dichtvorsprünge 29, 30 angeordnet.

Das Anlageelement 28 ist hohlzylinderförmig ausgebildet und weist eine Ausnehmung in Form einer Durchgangsöffnung 31 auf. Das Anlageelement 28 ist an einer Innenseite konisch ausgebildet, so dass sich die Durchgangsöffnung 31 verjüngt. An der Innenseite weist das Anlageelement 28 ein Innengewinde 32 auf, in das ein zweites Anschlusselement 33 mit einem zugehörigen Außengewinde 34 einschraubbar ist. Das Anschlusselement 33 dient beim Einschrauben als Spreizelement für das Anlageelement 28. Das Anschlusselement 33 ist ebenfalls hohlzylinderförmig ausgebildet und weist eine Durchgangsöffnung 35 auf. Die zweite Dichteinheit 14 dient zum Abdichten des Aufnahmeraums 6 gegenüber dem Innenraum 8.

Die Durchgangsöffnung 20 des ersten Anschlusselements 18 und der ringförmige Grundkörper-Innenraum 15 bilden einen ersten Kanal 36 zum Zuführen des Matrixmaterials 2 in den Aufnahmeraum 6. Die Durchgangsöffnung 31 des Anlageelements 28 und die Durchgangsöffnung 35 des zweiten Anschlusselements 33 bilden einen zweiten Kanal 37 zum Einstellen des Innendrucks pᵢ im Innenraum 8.

Zur Vermeidung einer Verengung des Aufnahmeraums 6 ist ein Abstandshalter 38 vorgesehen, der in den Aufnahmeraum 6 einführbar ist. Der Abstandshalter 38 ist hohlzylinderförmig ausgebildet und weist mehrere Abstandshalterkanäle 39 für das Matrixmaterial 2 auf. Der Abstandshalter 38 weist in Richtung der Mittellängsachse M_{A} eine Länge L_{H} auf, die größer als ein Abstand L_{S} des Anschlusselements 18 zu dem entfernten Ende des Aufnahmeelements 21 ist. Hierdurch wird einerseits gewährleistet, dass im Bereich der ersten Dichteinheit 13 der Aufnahmeraum 6 nicht verengt wird und andererseits ein Kontakt zu dem Anschlusselement 18 möglich ist.

Zur Stromzufuhr zu den Verstärkungsfasern 7 sind das Anschlusselement 18 und der Abstandshalter 38 elektrisch leitend ausgebildet und in Kontakt miteinander. Das Anschlusselement 18 und der Abstandshalter 38 sind vorzugsweise aus Metall.

Zum Verschließen eines gegenüberliegenden Endes des Innenraums 8 weist das Herstellungssystem 1 eine Verschlussvorrichtung 40 auf. Die Verschlussvorrichtung 40 umfasst einen zweiten Grundkörper 41, der hohlzylinderförmig ausgebildet ist und einen zweiten Grundkörper-Innenraum 42 begrenzt. An dem Grundkörper 41 ist ein Austragselement 43 angeordnet, das eine Durchgangsöffnung 44 ausbildet. Das Austragselement 43 ist beispielsweise entsprechend dem Anschlusselement 18 ausgebildet und eingeschraubt.

Die Verschlussvorrichtung 40 weist eine dritte Dichteinheit 45 auf, die entsprechend der ersten Dichteinheit 13 ausgebildet ist. Die Dichteinheit 45 weist dementsprechend ein drittes Aufnahmeelement 46 mit einer Aufnahmeöffnung 47 und einem zugehörigen Außengewinde 48 auf. Das Aufnahmeelement 46 ist einteilig mit dem Grundkörper 41 ausgebildet. Ein zugehöriges Anpresselement 49 weist eine Aufnahmeöffnung 50 und ein Innengewinde 51 auf. Zwischen dem Aufnahmeelement 46 und dem Anpresselement 49 ist ein elastisches Dichtelement 52 angeordnet.

Zum Verschließen des Innenraums 8 weist die Verschlussvorrichtung 40 ein Anlageelement 53 auf, das in den Innenraum 8 einführbar ist und zwei entlang einer Mittellängsachse M_{V} angeordnete Dichtvorsprünge 54, 55 aufweist. Das Anlageelement 53 ist einteilig mit dem Grundkörper 41 ausgebildet.

Um eine Verengung des Aufnahmeraums 6 im Bereich der Dichteinheit 45 zu vermeiden und eine Stromzufuhr zu ermöglichen, weist die Verschlussvorrichtung 40 einen Abstandshalter 56 mit Abstandshalterkanälen 57 auf.

Die Anschlussvorrichtung 9 und die Verschlussvorrichtung 40 sind aus einem Kunststoffmaterial ausgebildet. Eine Ausnahme hiervon sind die elektrisch leitenden Abstandshalter 38, 56 und das elektrisch leitende Anschlusselement 18 sowie das elektrisch leitende Austragselement 43, die aus Metall ausgebildet sind. Alternativ können die Anschlussvorrichtung 9 und die Verschlussvorrichtung 40 vollständig aus Metall ausgebildet sein.

Um eine unerwünschte Verformung des äußeren Wandelements 5 beim Einbringen des Matrixmaterials 2 zu vermeiden, weist das Herstellungssystem 1 eine Bauteilform 59 auf, die aus zwei fest miteinander verbindbaren Formhälften 61, 62 gebildet ist. Die Bauteilform 59 bildet einen endseitig offenen Hohlraum 63 aus, der zur Aufnahme des Strukturbauteil-Halbzeugs 3 dient. Die Bauteilform 59 bzw. der Hohlraum 63 weist eine kreisförmige Querschnittsform Q_{B} auf, die der kreisförmigen Querschnittsform Q_{S} des Strukturbauteil-Halbzeugs 3 entspricht, so dass das in dem Hohlraum 63 angeordnete Strukturbauteil-Halbzeug 3 mit dem äußeren Wandelement 5 gegen die Bauteilform 59 anliegt. Die Bauteilform 59 ist aus einem nicht-metallischen Material, beispielsweise aus Holz oder einem Modelliermaterial.

Zum Erzeugen eines Stromflusses durch die Verstärkungsfasern 7 weist das Herstellungssystem 1 eine elektrische Energiequelle 64 auf, die mit dem ersten Anschlusselement 18 und dem Austragselement 43 elektrisch leitend verbunden ist. Mittels der elektrischen Energiequelle 64 ist an die Verstärkungsfasern 7 eine Spannung U anlegbar.

Nachfolgend ist die Herstellung eines faserverstärkten Strukturbauteils beschrieben:

Zunächst wird das Herstellungssystem 1 an das Strukturbauteil-Halbzeug 3 montiert. Hierzu werden die Abstandshalter 38 und 56 endseitig durch die zweite Zuführöffnung A₂ und durch die gegenüberliegende, als Abführöffnung bezeichnete Öffnung B₂ in den Aufnahmeraum 6 eingeführt. Zur Montage der Anschlussvorrichtung 9 wird das Anpresselement 24 sowie das Anschlusselement 33 gelöst. Anschließend wird das Strukturbauteil-Halbzeug 3 mit seinem Ende in die Aufnahmeöffnungen 26 und 22 eingeführt, so dass das Anlageelement 28 gleichzeitig in den Innenraum 8 eingeführt wird. Anschließend wird das Anpresselement 24 auf das Anlageelement 21 aufgeschraubt, so dass mittels der ersten Dichteinheit 13 eine Dichtwirkung erzielt wird. Die Dichtwirkung wird durch Anpressen des Aufnahmeelements 21 an das äußere Wandelement 5 sowie durch Verformung und Anlage des Dichtelements 27 an dem Wandelement 5 erzielt. Weiterhin wird das Anschlusselement 33 in das Anlageelement 28 eingeschraubt, wodurch das Anlageelement 28 mit einem höheren Anpressdruck gegen die Innenseite des inneren Wandelements 4 gepresst wird. Hierdurch und durch die Dichtvorsprünge 29, 30 wird eine Dichtwirkung erzielt. Durch das Anbringen der Anschlussvorrichtung 9 ist das Anschlusselement 18 in Kontakt mit dem Abstandshalter 38. An dem gegenüberliegenden Ende des Strukturbauteil-Halbzeugs 3 wird in entsprechender Weise die Verschlussvorrichtung 40 montiert. Hierdurch wird die Öffnung B₁ des Innenraums 8 verschlossen. Zur Montage der Verschlussvorrichtung 40 wird das Anpresselement 49 gelöst. Das Strukturbauteil-Halbzeug 3 wird anschließend in die Aufnahmeöffnungen 50 und 47 eingeführt, wodurch das Anlageelement 53 gleichzeitig in den Innenraum 8 eingeführt wird und diesen aufgrund der Dichtvorsprünge 54, 55 verschließt. Zur Befestigung der Verschlussvorrichtung 40 wird das Anpresselement 49 auf das Aufnahmeelement 46 aufgeschraubt.

Das Strukturbauteil-Halbzeug 3 wird anschließend in den von der Formhälfte 62 gebildeten Teil des Hohlraums 63 angeordnet, wodurch das Strukturbauteil-Halbzeug 3 manuell geformt und in eine Sollform gebracht wird. Die Formhälfte 61 wird daraufhin auf der Formhälfte 62 angeordnet und mit dieser fest verbunden, so dass das Strukturbauteil-Halbzeug 3 vollständig von der Bauteilform 59 umgeben ist. Durch das äußere Wandelement 5 sind die Verstärkungsfasern 7 beim Einlegen in die Bauteilform 59 geschützt.

Anschließend wird die Pumpe 10 mit dem Anschlusselement 18 und die Pumpe 11 mit dem Anschlusselement 33 verbunden. Weiterhin wird die elektrische Energiequelle 64 mit dem Anschlusselement 18 oder dem Austragselement 43 elektrisch leitend verbunden und mittels der Energiequelle 64 eine Spannung U an die Verstärkungsfasern 7 angelegt, so dass durch diese ein Stromfluss erfolgt. Durch den Stromfluss werden die Anschlussvorrichtung 9, das Strukturbauteil-Halbzeug 3 und die Verschlussvorrichtung 40 erwärmt. Hierdurch wird die Viskosität des Matrixmaterials 2 beim Einbringen erniedrigt, so dass das Einbringen vereinfacht wird.

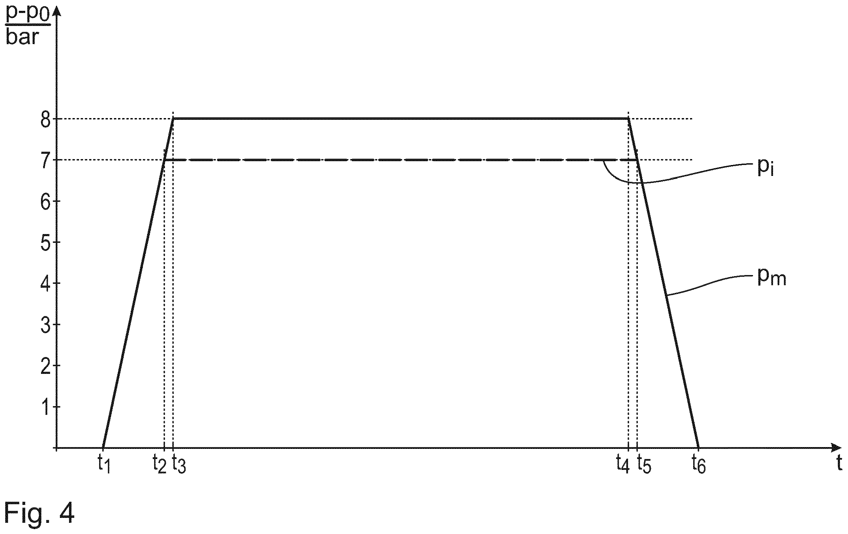

Mittels der Pumpe 10 wird nun das Matrixmaterial 2 mit einem Druck pₘ in den Aufnahmeraum 6 eingebracht. Um eine Beeinträchtigung der Qualität des späteren faserverstärkten Strukturbauteils zu vermeiden, wird mittels der zweiten Pumpe 11 gleichzeitig der Innendruck pᵢ eingestellt. Dies ist in Figur 4 veranschaulicht. Der Druck pₘ und der Innendruck pᵢ steigen im Zeitraum t₁ bis t₂ gleichzeitig bzw. gemeinsam an. Ab dem Zeitpunkt t₂ ist der Innendruck pᵢ konstant, wohingegen der Druck pₘ bis zu einem Zeitpunkt t₃ weiter ansteigt. Ab dem Zeitpunkt t₃ ist auch der Druck pₘ konstant. Ist der Aufnahmeraum 6 von dem Matrixmaterial 2 vollständig durchströmt, so dass Matrixmaterial 2 aus der Abführöffnung B₂ und dem Austragselement 43 austritt, wird der Druck pₘ ab dem Zeitpunkt t₄ wieder reduziert. Ist der Druck pₘ zum Zeitpunkt t₅ gleich dem Innendruck pᵢ, wird auch der Innendruck pᵢ wieder reduziert, so dass der Druck pₘ und der Innendruck pᵢ in dem Zeitraum t₅ bis t₆ gleichzeitig bzw. gemeinsam wieder bis auf den Umgebungsdruck p₀ abgenommen haben.

Für den maximalen Druck pₘ in dem Zeitraum t₃ bis t₄ gilt: pₘ ≥ 1,5 bar, insbesondere pₘ ≥ 3,0 bar und insbesondere pₘ ≥ 4,5 bar. Für den maximalen Innendruck pᵢ gilt in dem Zeitraum t₃ bis t₄: pᵢ ≤ pₘ, insbesondere pᵢ ≤ 0,95 · pₘ, insbesondere pᵢ ≤ 0,9 · pₘ und insbesondere pᵢ ≤ 0,8 · pₘ.

Das Matrixmaterial 2 strömt beim Einbringen durch die Durchgangsöffnung 20, den Grundkörper-Innenraum 15 und die Abstandshalterkanäle in den Aufnahmeraum 6. Das Matrixmaterial 2 wird somit durch die zweite Zuführöffnung A₂ zugeführt, wobei in dem Aufnahmeraum 6 befindliche Luft durch die Abführöffnung B₂ entweicht. Ist der Aufnahmeraum 6 gefüllt, so strömt das Matrixmaterial 2 durch die Abstandshalterkanäle 57, den Grundkörper-Innenraum 42 und die Durchgangsöffnung 44 in die Umgebung 58. Die Dichteinheit 13 dichtet hierbei den Aufnahmeraum 6 von der Umgebung 58 ab. Entsprechend dichtet die Dichteinheit 45 den Aufnahmeraum 6 von der Umgebung 58 ab, so dass das Matrixmaterial 2 nur durch das Austragselement 43 austreten und dort aufgefangen werden kann.

Der Innendruck pᵢ wird mittels der zweiten Pumpe 11 über den zweiten Kanal 37 eingestellt. Mittels der zweiten Pumpe 11 wird das Druckmedium 60 durch die erste Zuführöffnung A₁ in den Innenraum 8 gepumpt. Hierdurch wird eine unerwünschte Deformation des inneren Wandelements 4 vermieden. Eine unerwünschte Deformation des äußeren Wandelements 5 wird durch die Bauteilform 59 vermieden.

Nach dem Einbringen des Matrixmaterials 2 härtet das Strukturbauteil-Halbzeug 3 in seiner Sollform aus. Durch die mittels der elektrischen Spannung U erzeugten Wärme wird das Aushärten beschleunigt. Durch das Aushärten wird das faserverstärkte Strukturbauteil ausgebildet. Nach dem Aushärten wird das faserverstärkte Strukturbauteil aus der Bauteilform 59 entnommen und die Anschlussvorrichtung 9 sowie die Verschlussvorrichtung 40 in umgekehrter Weise zu der Montage demontiert.

Aufgrund des Innendrucks pᵢ wurde das innere Wandelement 4 geringfügig aufgeweitet, so dass dieses im drucklosen Zustand entfernbar ist. Das innere Wandelement 4 wird dementsprechend durch Herausziehen aus dem ausgehärteten Matrixmaterial 2 entfernt. Das äußere Wandelement 5 wird geschlitzt und anschließend ebenfalls entfernt. Das verbleibende faserverstärkte Strukturbauteil besteht somit ausschließlich aus dem ausgehärteten Matrixmaterial 2 mit den darin eingebetteten Verstärkungsfasern 7. Die innere Oberfläche sowie die äußere Oberfläche des faserverstärkten Strukturbauteils sind glatt und weisen keine Grate auf.

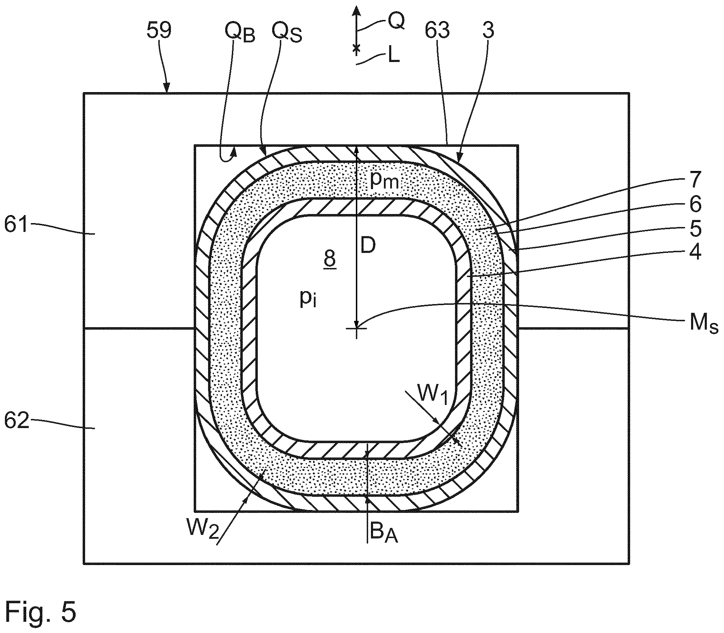

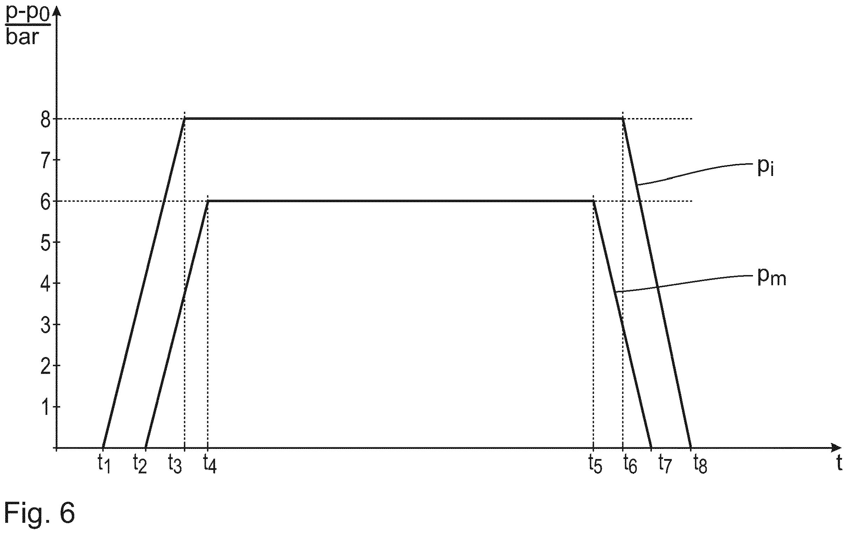

Nachfolgend ist unter Bezugnahme auf die Figuren 5 und 6 ein zweites Ausführungsbeispiel der Erfindung beschrieben. Im Unterschied zu dem ersten Ausführungsbeispiel weist die Bauteilform 59 bzw. der Hohlraum 63 eine rechteckige Querschnittsform Q_{B} auf, die von der kreisrunden Querschnittsform Q_{S} des Strukturbauteil-Halbzeugs 3 abweicht. Aufgrund der Bauteilform 59 und des Innendrucks pᵢ passt sich die Querschnittsform Q_{S} des Strukturbauteil-Halbzeugs 3 an die Querschnittsform Q_{B} an, so dass faserverstärkte Strukturbauteile mit einer von einer kreisrunden Querschnittsform abweichenden Querschnittsform, beispielsweise einer ovalen Querschnittsform, erzeugt werden. Hierzu wird der Innendruck pᵢ vor dem Druck pₘ im Zeitraum t₁ bis t₃ erhöht. Dies ist in Fig. 6 veranschaulicht. In dem Zeitraum t₃ bis t₆ ist der Innendruck pᵢ konstant und nimmt in dem Zeitraum t₆ bis t₈ wieder auf den Umgebungsdruck p₀ ab. Demgegenüber steigt der Druck pₘ im Zeitraum t₂ bis t₄ an und bleibt im Zeitraum t₄ bis t₅ konstant. Anschließend nimmt der Druck pₘ im Zeitraum t₅ bis t₇ wieder auf den Umgebungsdruck pₒ ab. Für den maximalen Innendruck pᵢ gilt insbesondere im Zeitraum t₄ bis t₅: pᵢ ≥ pₘ, insbesondere pᵢ ≥ 1,1 · pₘ, insbesondere pᵢ ≥ 1,3 · pₘ und insbesondere pᵢ ≥ 1,5 · pₘ. Hinsichtlich des Aufbaus des Herstellungssystems 1 und des weiteren Herstellungsverfahrens wird auf das erste Ausführungsbeispiel verwiesen.
Bei beiden Ausführungsbeispielen gilt für das Verhältnis von dem maximalen Innendruck pᵢ zu dem maximalen Druck pₘ zumindest zeitweise: 0,8 ≤ pᵢ / pₘ ≤ 1,5, insbesondere 0,9 ≤ pᵢ / pₘ ≤ 1,3 und insbesondere 0,95 ≤ pᵢ / pₘ ≤ 1,1.

Durch das Herstellungssystem 1 wird eine einfache und schnelle Herstellung von faserverstärkten Strukturbauteilen ermöglicht, wodurch für den industriellen Einsatz geringe Taktzeiten bei der Herstellung erzielbar sind. Durch das Einbringen des Matrixmaterials 2 mit einem hohen Druck pₘ kann der Aufnahmeraum 6 mit einer vergleichsweise geringen radialen Breite B_{A} ausgebildet werden, so dass das spätere faserverstärkte Strukturbauteil ein vergleichsweise geringes Gewicht aufweist. Zusätzlich kann das innere Wandelement 4 und/oder das äußere Wandelement 5 nach dem Aushärten entfernt werden, wodurch eine weitere Gewichtseinsparung erzielt wird. Aufgrund der glatten und gratfreien Oberflächen muss das faserverstärkte Strukturbauteil nach dem Entfernen der Wandelemente 4, 5 nicht nachbearbeitet werden. Durch die Einstellung des Innendrucks pᵢ in dem Innenraum 8 wird eine Geometriekontrolle des inneren Wandelements 4 und der Verstärkungsfasern 7 ermöglicht, so dass Faserverzerrungen oder Faserverdichtungen wirkungsvoll vermieden werden können und das spätere faserverstärkte Strukturbauteil eine hohe Qualität aufweist. Für den Druck pₘ gilt insbesondere: pₘ ≥ 1,5 bar, insbesondere pₘ ≥ 3,0 bar, insbesondere pₘ ≥ 4,5 bar, und insbesondere pₘ ≥ 6,0 bar.

Durch den flächigen Anpressdruck bzw. die Flächenpressung der Dichteinheiten 13, 14 wird einerseits eine kraftschlüssige Verbindung zwischen dem Strukturbauteil-Halbzeug 3 und der Anschlussvorrichtung 9 erzielt und andererseits ein gleichzeitiges Einbringen von Matrixmaterial 2 und eine Einstellung des Innendrucks pᵢ ermöglicht, da der Aufnahmeraum 6 gegenüber der Umgebung 58 und gegenüber dem Innenraum 8 abgedichtet ist.

Der Abstandshalter 38 gewährleistet trotz dem flächigen radialen Anpressdruck ein einfaches Einbringen des Matrixmaterials 2 mit möglichst geringem Widerstand. Gleichzeitig ermöglicht der Abstandshalter 38 in Verbindung mit dem Abstandshalter 56 der Verschlussvorrichtung 40 einen Stromfluss zum beschleunigten Aushärten des Matrixmaterials 2. Zusätzlich kann die Anschlussvorrichtung 9 vor Einbringen des Matrixmaterials 2 durch einen Stromfluss über die Verstärkungsfasern 7 auf bis zu 80 °C erwärmt werden, wobei die Viskosität des Matrixmaterials 2 und dessen Fließeigenschaften positiv beeinflusst werden.

Eine Ausbildung der Anschlussvorrichtung 9 und/oder der Verschlussvorrichtung 40 aus Kunststoffmaterial - mit Ausnahme der elektrisch leitenden Bauteile - ist einfach und kostengünstig. Demgegenüber ermöglicht eine Ausführung der Anschlussvorrichtung 9 und/oder der Verschlussvorrichtung 40 aus Metall eine einfache Reinigung und Wiederverwendung.

Durch das erfindungsgemäße Herstellungsverfahren ist ein Einbringen des Matrixmaterials 2 mit einem Druck pₘ und einem zugehörigen Innendruck pᵢ von bis zu 20 bar möglich. Durch die Durchgangsöffnung 44 des Austragselements 43 kann die in dem Aufnahmeraum 6 befindliche Luft beim Einbringen des Matrixmaterials 2 entweichen. Um das Einbringen des Matrixmaterials 2 zu erleichtern, kann in den Innenraum 8 Heißluft bzw. Dampf eingebracht werden. Hierdurch ist eine Erwärmung der Anschlussvorrichtung 9 möglich, wodurch die Fließeigenschaften des Matrixmaterials 2 verbessert werden. Das Matrixmaterial 2 weist durch die erwärmte Anschlussvorrichtung 9 und das erwärmte Strukturbauteil-Halbzeug 3 eine niedrigere Viskosität auf, wodurch ein einfacheres und schnelleres Einbringen sowie ein beschleunigtes Aushärten ermöglicht werden.

Das zweite Wandelement 5 ist vorzugsweise druckstabil ausgebildet. Insbesondere ist das zweite Wandelement 5 zur Erzielung einer hohen radialen Druckstabilität faserverstärkt. Beispielsweise ist das äußere Wandelement 5 ein faserverstärkter Kunststoffschlauch bzw. PVC-Schlauch. Bei Verwendung eines druckstabilen äußeren Wandelements 5 ist eine Bauteilform 59 bei der Herstellung des Strukturbauteils 1 nicht erforderlich. Das Strukturbauteil-Halbzeug 3 kann mittels Hilfsmitteln bzw. Fixiermitteln in einfacher Weise in der zumindest teilweise gekrümmten Sollform fixiert werden.

Das zweite Wandelement 5 weist einen äußeren Durchmesser D auf, für den vorzugsweise gilt: 10 mm ≤ D ≤ 200 mm, insbesondere 15 mm ≤ D ≤ 150 mm, und insbesondere 20 mm ≤ D ≤ 100. Das zweite Wandelement 5 weist ferner eine radiale Wandstärke W₂ bzw. W auf, wobei vorzugsweise gilt: 5 ≤ D/W ≤ 30 und insbesondere 10 ≤ D/W ≤ 20. Weiterhin weist das zweite Wandelement 5 vorzugsweise eine Härte von höchstens 100 Shore A, insbesondere von höchstens 90 Shore A, und insbesondere von höchstens 80 Shore A auf. Durch die Ausbildung des zweiten Wandelements 5 wird einerseits eine ausreichende Stabilität gegenüber Druckdifferenzen zwischen dem Aufnahmeraum 6 und der Umgebung 58 gewährleistet und andererseits eine Verformbarkeit bzw. Biegbarkeit des Strukturbauteil-Halbzeugs 1 gewährleistet. Die Wandelemente 4, 5 sind vorzugsweise derart formbar, dass ein Krümmungsradius des Strukturbauteil-Halbzeugs 1 von weniger als 10 D, insbesondere von weniger als 8 D, insbesondere von weniger als 6 D, und insbesondere von weniger als 4 D erzielbar ist. Die Wandelemente 4, 5 sind vorzugsweise aus Kunststoff ausgebildet, insbesondere aus einem thermoplastischen Kunststoff.

Die Wandstärke W₁ des ersten Wandelements 4 und/oder die Wandstärke W₂ des zweiten Wandelements 5 können gleich oder unterschiedlich sein.

Die Wandstärken W₁ und/oder W₂ liegen vorzugsweise zwischen 1 mm und 6 mm, insbesondere zwischen 1,5 mm und 5 mm, und insbesondere zwischen 2 mm und 4 mm.

Das Strukturbauteil-Halbzeug 3 bzw. die Wandelemente 4, 5 sind rohrförmig ausgebildet, wobei die Öffnungen zu dem Aufnahmeraum 6 und dem Innenraum 8 stirnseitig ausgebildet sind. Die Anschlussvorrichtung 9 und die Verschlussvorrichtung 40 sind in ihrer Querschnittsform an die Querschnittsform der Wandelemente 4, 5 angepasst.

## Patentansprüche

1. Verfahren zur Herstellung eines faserverstärkten Strukturbauteils umfassend die folgenden Schritte:
- Bereitstellen eines Strukturbauteil-Halbzeugs (3) mit
∘ einem ersten Wandelement (4),
∘ einem das erste Wandelement (4) umgebenden zweiten Wandelement (5),
∘ einem Aufnahmeraum (6), der in einer Querrichtung (Q) von den Wandelementen (4, 5) begrenzt ist und sich in einer Längsrichtung (L) zwischen den Wandelementen (4, 5) erstreckt,
∘ einem Innenraum (8), der in der Querrichtung (Q) von dem ersten Wandelement (4) begrenzt ist,
∘ in dem Aufnahmeraum (6) angeordneten Verstärkungsfasern (7),
∘ einer ersten Zuführöffnung (A) zum Zuführen eines Druckmediums (60) in den Innenraum (8), und
∘ einer zweiten Zuführöffnung (A₂) zum Zuführen von fließfähigem Matrixmaterial (2) in den Aufnahmeraum (6),
- Formen des Strukturbauteil-Halbzeugs (3) zum Erzeugen einer zumindest teilweise gekrümmten Sollform,
- Zuführen eines Druckmediums (60) durch die erste Zuführöffnung (A₁) in den Innenraum (8) zur Einstellung eines Innendrucks pᵢ,
- Einbringen von fließfähigem und unter einem Druck pₘ stehenden Matrixmaterial (2) durch die zweite Zuführöffnung (A₂) in den Aufnahmeraum (6), wobei für den Innendruck pᵢ zumindest zeitweise gilt: pₘ ≤ pₘ, und
- Aushärten des Matrixmaterials (2), so dass das in der Sollform befindliche Strukturbauteil-Halbzeug (3) ein faserverstärktes Strukturbauteil ausbildet.

2. Verfahren nach Anspruch 1, **dadurch gekennzeichnet,**
**dass** für den Druck pₘ zumindest zeitweise gilt: pₘ ≥ 1,5 bar, insbesondere pₘ ≥ 3,0 bar und insbesondere pₘ ≥ 4,5 bar.

3. Verfahren nach Anspruch 1 oder 2, **dadurch gekennzeichnet,**
**dass** für den Innendruck pᵢ zumindest zeitweise gilt: pᵢ ≥ pₘ, insbesondere pᵢ ≥ 1,1 · pₘ, insbesondere pᵢ ≥ 1,3 · pₘ und insbesondere pᵢ ≥ 1,5 · pₘ; und/oder
**dass** für den Innendruck pᵢ zumindest zeitweise gilt: pᵢ ≤ 0,95 · pₘ, insbesondere pᵢ ≤ 0,9 · pₘ und insbesondere pᵢ ≤ 0,8 · pₘ.

4. Verfahren nach einem der Ansprüche 1 bis 3, **dadurch gekennzeichnet,**
**dass** für das Verhältnis von dem Innendruck pᵢ zu dem Druck pₘ zumindest zeitweise gilt: 0,8 ≤ pᵢ/pₘ ≤ 1,5, insbesondere 0,9 ≤ pᵢ/pₘ ≤ 1,3 und insbesondere 0,95 ≤ pᵢ/pₘ ≤ 1,1.

5. Verfahren nach einem der Ansprüche 1 bis 4, **dadurch gekennzeichnet,**
**dass** das Strukturbauteil-Halbzeug (3) in einer Bauteilform (59) angeordnet wird, wobei das Strukturbauteil-Halbzeug (3) insbesondere vor oder nach dem Einbringen des Matrixmaterials (2) in der Bauteilform (59) angeordnet wird, wobei insbesondere die Bauteilform (59) eine Querschnittsform Q_{B} aufweist, die von einer Querschnittsform Qs des Strukturbauteil-Halbzeugs (3) abweicht.

6. Verfahren nach Anspruch 5, **dadurch gekennzeichnet,**
**dass** die Bauteilform (59) aus einem nicht-metallischen Material ist, insbesondere aus Holz oder einem Modelliermaterial;
und/oder
**dass** die Bauteilform (59) das Strukturbauteil-Halbzeug (3) im Querschnitt nur teilweise umgibt.

7. Verfahren nach einem der Ansprüche 1 bis 6, **dadurch gekennzeichnet,**
**dass** der Aufnahmeraum (6) in der Längsrichtung (L) eine Länge L_{A} und in der Querrichtung (Q) eine radiale Breite B_{A} aufweist, wobei für das Verhältnis der Länge L_{A} zu der Breite B_{A} gilt: 50 ≤ L_{A/}B_{A} ≤ 2000, insbesondere 100 < L_{A/}B_{A} < 1500 und insbesondere 250 ≤ L_{A}/B_{A} ≤ 1000.

8. Verfahren nach einem der Ansprüche 1 bis 7, **dadurch gekennzeichnet,**
**dass** das erste Wandelement (4) und das zweite Wandelement (5) aus einem biegbaren Material sind;
und/oder
**dass** das erste Wandelement (4) und/oder das zweite Wandelement (5) nach dem Aushärten des Matrixmaterials (2) entfernt wird.

9. Verfahren nach einem der Ansprüche 1 bis 8, **dadurch gekennzeichnet,**
**dass** das Druckmedium (60) zumindest gleichzeitig mit dem Matrixmaterial (2) zugeführt wird.

10. Verfahren nach einem der Ansprüche 1 bis 9, **dadurch gekennzeichnet,**
**dass** die erste Zuführöffnung (A₁) und/oder die zweite Zuführöffnung (A₁₂) stirnseitig an dem Strukturbauteil-Halbzeug (3) ausgebildet ist.

11. Verfahren nach einem der Ansprüche 1 bis 10, **dadurch gekennzeichnet,**
**dass** der Aufnahmeraum (6) in Längsrichtung (L) endseitig des Strukturbauteil-Halbzeugs (3) eine Abführöffnung (B₂) aufweist.

12. Verfahren nach einem der Ansprüche 1 bis 11, **dadurch gekennzeichnet,**
**dass** an die Verstärkungsfasern (7) mittels einer elektrischen Energiequelle (64) eine elektrische Spannung (U) angelegt wird.

13. Verfahren nach einem der Ansprüche 1 bis 12, **dadurch gekennzeichnet,**
**dass** zweite Wandelement (5) in radialer Richtung druckstabil ist;
und/oder
**dass** das zweite Wandelement (5) faserverstärkt ist;
und/oder
**dass** das zweite Wandelement (5) einen äußeren Durchmesser D und eine radiale Wandstärke W aufweist, wobei gilt: 5 ≤ D/W ≤ 30, insbesondere 10 ≤ D/W ≤ 20.

14. Verfahren nach einem der Ansprüche 1 bis 13, **dadurch gekennzeichnet,**
**dass** während des Einbringens des Matrixmaterials (2) der Innendruck pᵢ erhöht wird.

## Claims

1. Method for manufacturing a fiber reinforced structural component, comprising the following steps:
providing a structural component semi-finished product (3) with
a first wall element (4),
a second wall element (5) surrounding the first wall element (4),
a receiving space (6) bordered in a cross direction (Q) by the wall elements (4, 5) and extending in a length direction (L) between the wall elements (4, 5),
an internal space (8) bordered in the cross direction (Q) by the first wall element (4),
reinforcing fibers (7) arranged in the receiving space (6),
a first supply opening (A) for supplying a pressure medium (60) in the internal space (8), and
a second supply opening (A₂) for supplying a flowable matrix material (2) in the receiving space (6),
forming the structural component semi-finished product (3) for producing an at least partially curved target form,
supplying a pressure medium (60) through the first supply opening (A₁) in the internal space (8) for adjusting an internal pressure pᵢ,
inserting a matrix material (2) being flowable and under pressure pₘ through the second supply opening (A₂) in the receiving space (6), wherein for the internal pressure pᵢ at least temporary applies pᵢ ≤ pₘ, and
hardening of the matrix material (2) such that the structural component semi-finished product (3) being in the target form forms a fiber reinforced structural component.

2. Method according to claim 1, **characterized in that**
for the pressure pₘ at least temporary applies: pₘ ≥ 1,5 bar, in particular pₘ ≥ 3,0 bar and in particular pₘ ≥ 4,5 bar.

3. Method according to claim 1 or 2, **characterized in that**
for the internal pressure pᵢ at least temporary applies : pᵢ ≥ pₘ, in particular pᵢ ≥ 1,1 · pₘ, in particular pᵢ ≥ 1,3 · pₘ and in particular pᵢ ≥ 1,5 · pₘ;
and/or
for the internal pressure pᵢ at least temporary applies: pᵢ ≤ 0,95 · pₘ, in particular pᵢ ≤ 0,9 · pₘ and in particular pᵢ ≤ 0,8 · pₘ.

4. Method according to one of the claims 1 to 3, **characterized in that**
for the ratio of the internal pressure pᵢ to the pressure pₘ at least temporary applies: 0,8 ≤ pᵢ/pₘ ≤ 1,5, in particular 0,9 ≤ pᵢ/pₘ ≤ 1,3 and in particular 0,95 ≤ pᵢ/pₘ ≤ 1,1.

5. Method according to one of the claims 1 to 4, **characterized in that**
the structural component semi-finished product (3) is arranged in a component shape (59),
wherein the structural component semi-finished product (3) is arranged in the component shape (59) in particular before or after the inserting of the matrix material (2),
wherein in particular the component shape (59) comprises a cross section form Q_{B} which differs from a cross section form Qₛ of the structural component semi-finished product (3).

6. Method according to claim 5, **characterized in that**
the component shape (59) is of a non-metallic material, in particular of wood or a modeling material;
and/or
the component shape (59) surrounds at least partially the structural component semi-finished product (3) in the cross section.

7. Method according to one of the claims 1 to 6, **characterized in that**
the receiving space (6) in the length direction (L) is a length L_{A} and comprises in the cross direction (Q) a radial width B_{A}, wherein for the ratio of the length L_{A} to the width B_{A} applies: 50 ≤ L_{A}/B_{A} ≤ 2000, in particular 100 ≤ L_{A}/B_{A} ≤ 1500 and in particular 250 ≤ L_{A}/B_{A} ≤ 1000.

8. Method according to one of the claims 1 to 7, **characterized in that**
the first wall element (4) and the second wall element (5) are made of a bendable material;
and/or
the first wall element (4) and/or the second wall element (5) is removed after the hardening of the matrix material (2).

9. Method according to one of the claims 1 to 8, **characterized in that**,
the pressure medium (60) is supplied at least simultaneously with the matrix material (2).

10. Method according to one of the claims 1 to 9, **characterized in that**
the first supply opening (A₁) and/or the second supply opening (A₁₂) are formed at the face side at the structural component semi-finished product (3).

11. Method according to one of the claims 1 to 10, **characterized in that**,
the receiving space (6) comprises a discharge opening (B₂) in the length direction (L) at the end side of the structural component semi-finished product (3).

12. Method according to one of the claims 1 to 11, **characterized in that**
an electrical voltage (U) is applied at the reinforcing fibers (7) by an electrical energy source (64).

13. Method according to one of the claims 1 to 12, **characterized in that**
the second wall element (5) is pressure stable in radial direction;
and/or
the second wall element (5) is fiber reinforced;
and/or
the second wall element (5) comprises an outer diameter D and a radial wall thickness W, wherein applies: 5 ≤ D/W ≤ 30, in particular 10 ≤ d/W ≤ 20.

14. Method according to one of the claims 1 to 13, **characterized in that** during inserting the matrix material (2) the internal pressure pᵢ is increased.

## Revendications

1. Procédé de fabrication d'un composant structurel renforcé par des fibres comprenant les étapes suivantes :
- la mise à disposition d'un demi-produit de composant structurel (3) avec
un premier élément de paroi (4),
un second élément de paroi (5) entourant le premier élément de paroi (4),
un espace de réception (6) qui est délimité dans un sens transversal (Q) par les élément de paroi (4, 5) et s'étend dans un sens longitudinal (L) entre les élément de paroi (4, 5),
un espace intérieur (8) qui est délimité dans le sens transversal (Q) par le premier élément de paroi (4),
des fibres de renversement (7) agencées dans l'espace de réception (6),
une première ouverture de fourniture (A) pour la fourniture d'un agent de pression (60) dans l'espace intérieur (8), et
une seconde ouverture de fourniture (A₂) pour la fourniture de matériau de matrice coulant (2) dans l'espace de réception (6),
- la formation du demi-produit de composant structurel (3) pour la génération d'une forme de consigne courbée au moins partiellement,
- la fourniture d'un produit de pression (60) par la première ouverture de fourniture (A₁) dans l'espace intérieur (8) pour le réglage d'une pression interne pᵢ,
- l'introduction de matériau de matrice (2) coulant et se trouvant sous une pression pₘ au travers de la, seconde ouverture de fourniture (A₂) dans l'espace de réception (6), dans lequel pour la pression interne pᵢ s'applique au moins partiellement : pᵢ ≤ pₘ, et
- le durcissement du matériau de matrice (2) de sorte que le demi-produit de composant structurel (3) se trouvent dans la forme de consigne réalise un composant structurel renforcé par des fibres.

2. Procédé selon la revendication 1, **caractérisé en ce**
**que** pour la pression pₘ s'applique au moins partiellement : pₘ ≥ 1,5 bar, en particulier pₘ ≥ 3,0 bars et en particulier pₘ ≥ 4,5 bars.

3. Procédé selon la revendication 1 ou 2, **caractérisé en ce**
**que** pour la pression interne pᵢ s'applique au moins partiellement : pᵢ ≥ pₘ, en particulier pᵢ ≥ 1,1·pₘ, en particulier pᵢ ≥ 1,3·pₘ et en particulier pᵢ ≥ 1,5·pₘ ;
et/ou
**que** pour la pression interne pᵢ s'applique au moins partiellement : pᵢ ≤ 0,95 ·pₘ, en particulier pᵢ ≤ 0,9 ·pₘ et en particulier pᵢ ≤ 0,8 ·pₘ.

4. Procédé selon l'une des revendications 1 à 3, **caractérisé en ce que** pour le rapport de la pression interne pᵢ à la pression pₘ s'applique au moins partiellement : 0,8 ≤ pᵢ/pₘ ≤ 1,5, en particulier 0,9 ≤ pᵢ/pₘ ≤ 1,3 et en particulier 0,95 ≤ p_{i/}pₘ ≤ 1,1.

5. Procédé selon l'une des revendications 1 à 4, **caractérisé en ce que** le demi-produit de composant structurel (3) est agencé dans une forme de composant (59), dans lequel le demi-produit de composant structurel (3) est agencé en particulier avant ou après l'introduction du matériau de matrice (2) dans la forme de composant (59), dans lequel en particulier la forme de composant (59) présente une forme de section Q_{B} qui diverge d'une forme de section Q_{S} du demi-produit de composant structurel (3).

6. Procédé selon la revendication 5, **caractérisé en ce**
**que** la forme de composant (59) est en un matériau non métallique, en particulier en bois ou un matériau modelable ;
et/ou
**que** la forme de composant (59) entoure seulement partiellement en section le demi-produit de composant structurel (3).

7. Procédé selon l'une des revendications 1 à 6, **caractérisé en ce que** l'espace de réception (6) présente dans le sens longitudinal (L) une longueur L_{A} et dans le sens transversal (Q) une largeur radiale B_{A}, dans lequel pour le rapport de la longueur L_{A} à la largueur B_{A} s'applique : 50 ≤ L_{A}/B_{A} ≤ 2 000, en particulier 100 < L_{A}/B_{A} < 1 500 et en particulier 250 ≤ L_{A}/B_{A} ≤ 1 000.

8. Procédé selon l'une des revendications 1 à 7, **caractérisé en ce**
**que** Le premier élément de paroi (4) et le second élément de paroi (5) sont en un matériau flexible ;
et/ou
**que** le premier élément de paroi (4) et/ou le second élément de paroi (5) est retiré après le durcissement du matériau de matrice (2).

9. Procédé selon l'une des revendications 1 à 8, **caractérisé en ce que** le produit de pression (60) est fourni au moins simultanément avec le matériau de matrice (2).

10. Procédé selon l'une des revendications 1 à 9, **caractérisé en ce que** la première ouverture de fourniture (A₁) et/ou la seconde ouverture de fourniture (A₁₂) est réalisée côté avant sur le demi-produit de composant structurel (3).

11. Procédé selon l'une des revendications 1 à 10, **caractérisé en ce que** l'espace de réception (6) présente dans le sens longitudinal (L) côté extrémité du demi-produit de composant structurel (3) une ouverture d'évacuation (B₂).

12. Procécé selon l'une des revendications 1 à 11, **caractérisé en ce qu'**une tension électrice (U) est créée sur les fibres de renforcement (7) à l'aide d'une source d'énergie (64) électrique.

13. Procédé selon l'une des revendications 1 à 12, **caractérisé en ce**
**que** le second élément de paroi (5) est stable à la pression dans le sens radical ;
et/ou
**que** le second élément de paroi (5) est renforcé par des fibres ;
et/ou
**que** le second élément de paroi (5) présente un diamètre extérieur D et une épaisseur de paroi radiale W, dans lequel supplique : 5 ≤ D/W ≤ 30, en particulier 10 ≤ D/W ≤ 20.

14. Procédé selon l'une des revendications 1 à 13, **caractérisé en ce que** pendant l'introduction du matériau de matrice (2) la pression interne pᵢ est augmentée.
